(19) Europäisches Patentamt
European Patent Office
Office européen des brevets

(11) **EP 3 887 258 B1**

(12) **FASCICULE DE BREVET EUROPEEN**

(45) Date de publication et mention
de la délivrance du brevet:
**01.06.2022 Bulletin 2022/22**

(21) Numéro de dépôt: **20726224.7**

(22) Date de dépôt: **17.03.2020**

(51) Classification Internationale des Brevets (IPC):
**B64G 1/28** *(2006.01)* **B64G 1/36** *(2006.01)*
**G01C 21/24** *(2006.01)*

(52) Classification Coopérative des Brevets (CPC):
**B64G 1/1021; B64G 1/286; B64G 1/361;**
**G01C 21/24;** B64G 1/244; B64G 1/288

(86) Numéro de dépôt international:
**PCT/FR2020/050574**

(87) Numéro de publication internationale:
**WO 2020/193916 (01.10.2020 Gazette 2020/40)**

(54) **DISPOSITIF ET PROCÉDÉ DE DÉTERMINATION D'ATTITUDE D'UN SATELLITE ÉQUIPÉ D'ACTIONNEURS GYROSCOPIQUES, ET SATELLITE EMBARQUANT UN TEL DISPOSITIF**

VORRICHTUNG UND VERFAHREN ZUR LAGEBESTIMMUNG EINES MIT GYROSKOPISCHEN AKTUATOREN VERSEHENEN SATELLITEN UND SATELLIT MIT EINER SOLCHEN VORRICHTUNG

DEVICE AND METHOD FOR DETERMINING THE ATTITUDE OF A SATELLITE EQUIPPED WITH GYROSCOPIC ACTUATORS, AND SATELLITE CARRYING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2019 FR 1903104**

(43) Date de publication de la demande:
**06.10.2021 Bulletin 2021/40**

(73) Titulaire: **Airbus Defence and Space SAS**
**31402 Toulouse Cedex 4 (FR)**

(72) Inventeurs:
• **LAURENS, Philippe**
**31402 Toulouse Cedex 4 (FR)**
• **LESPRIER, Jeremy**
**31402 Toulouse Cedex 4 (FR)**

(74) Mandataire: **Plasseraud IP**
**66, rue de la Chaussée d'Antin**
**75440 Paris Cedex 09 (FR)**

(56) Documents cités:
**WO-A1-2012/152669 FR-A1- 2 957 895**

• **Steyn Douw: "Variable Speed Scissored Pair Dual Gimbal Control Moment Gyro for Nano-Satellites", , 1 December 2015 (2015-12-01), XP055797499, Retrieved from the Internet: URL:https://scholar.sun.ac.za/handle/10019 .1/9 8062 [retrieved on 2021-04-21]**

**Description**

Domaine technique

La présente invention appartient au domaine des satellites artificiels dont l'attitude est contrôlée par des moyens comprenant un ou plusieurs actionneurs inertiels (voir par exemple FR 2957895 A1). Plus particulièrement, la présente invention concerne un procédé et un dispositif de détermination de l'attitude d'un satellite embarquant des actionneurs inertiels du type actionneurs gyroscopiques, ainsi qu'un satellite embarquant un tel dispositif.

Etat de la technique

Pour déterminer l'attitude d'un satellite il est connu d'embarquer un senseur stellaire dans le satellite. Un tel senseur stellaire est un capteur optique qui observe une zone de l'espace, et qui détermine l'attitude dudit satellite en fonction des positions d'étoiles dans son champ de vision. Toutefois, les mesures effectuées par un senseur stellaire sont parfois trop bruitées ou indisponibles (éblouissements, etc.) pour permettre de déterminer l'attitude du satellite avec une précision suffisante, en se basant uniquement sur les mesures du senseur stellaire.
Il est également connu de déterminer les variations d'attitude d'un satellite artificiel en embarquant dans le satellite des gyromètres. Les gyromètres sont des capteurs cinétiques qui mesurent la vitesse de rotation du satellite, vitesse de rotation qui permet de déterminer les variations d'attitude du satellite. En pratique, il n'est pas rare d'avoir quatre gyromètres ou plus dans un satellite, pour la détermination des variations d'attitude dudit satellite.
Les dispositifs de détermination d'attitude actuels sont généralement munis à la fois de gyromètres et de senseurs stellaires. De tels dispositifs permettent de déterminer l'attitude du satellite avec une bonne précision, car les mesures fournies par les gyromètres permettent de filtrer les bruits de mesure des senseurs stellaires. Toutefois, de tels dispositifs sont coûteux, en particulier du fait de la présence de nombreux gyromètres.
On connait du brevet US 6263264 (voir également WO 2012/152669 A1) un satellite dépourvu de gyromètre qui utilise les mesures de rotation des roues de réaction dudit satellite pour améliorer la précision de la détermination d'attitude. Toutefois, une telle solution n'est applicable que pour des roues de réaction, et n'est pas applicable lorsque les actionneurs inertiels sont des actionneurs gyroscopiques (voir par exemple « Variable Speed Scissored Pair Dual Gimbal Control Moment Gyro for Nano-Satellites », D. Steyn, 2015).

Exposé de l'invention

La présente invention a pour objectif de remédier aux inconvénients des dispositifs proposés par l'art antérieur, notamment à ceux exposés ci-avant, en proposant une solution qui permette, pour des satellites équipés d'actionneurs gyroscopiques, d'avoir des dispositifs de détermination d'attitude qui soient dépourvus de gyromètres, tout en réduisant l'impact des bruits de mesure des senseurs stellaires sur la détermination de l'attitude.
Selon un premier aspect, la présente invention concerne un dispositif de détermination d'une attitude d'un satellite, ledit satellite étant muni d'un système de contrôle d'attitude comportant au moins un actionneur gyroscopique, ledit au moins un actionneur gyroscopique comportant un volant d'inertie monté mobile en rotation autour d'un axe de rotation, ledit volant d'inertie étant porté par un cardan articulé en rotation autour d'un axe de rotation, ledit dispositif comportant un capteur d'attitude apte à mesurer l'attitude dudit satellite. Ledit dispositif comporte en outre :

- un capteur de position apte à mesurer la position angulaire du cardan autour de son axe de rotation,
- un capteur de vitesse apte à mesurer la vitesse de rotation du volant d'inertie,
- des moyens de calcul configurés pour déterminer l'attitude du satellite en utilisant la mesure de la position angulaire du cardan effectuée par le capteur de position, la mesure de la vitesse de rotation du volant d'inertie effectuée par le capteur de vitesse et la mesure d'attitude du satellite effectuée par le capteur d'attitude.

Du fait du principe de conservation du moment cinétique, la vitesse de rotation du satellite, la vitesse de rotation du volant d'inertie de l'actionneur gyroscopique et la position angulaire du cardan dudit actionneur gyroscopique sont liées. Par conséquent, la prise en compte de la vitesse de rotation du volant d'inertie et de la position angulaire du cardan permet d'améliorer la précision lors de la détermination d'attitude et, éventuellement, de ne pas avoir à utiliser un ou plusieurs gyromètres.
Dans des modes particuliers de réalisation, le dispositif de détermination d'attitude peut comporter en outre l'une ou plusieurs des caractéristiques suivantes, prises isolément ou selon toutes les combinaisons techniquement possibles.
Dans des modes particuliers de réalisation, le capteur d'attitude comporte un ou plusieurs senseurs stellaires.
Dans des modes particuliers de réalisation, les moyens de calcul comprennent un module d'émulation de gyromètre configuré pour déterminer une grandeur, dite incrément angulaire, représentative de la variation d'attitude du satellite induite par l'au moins un actionneur gyroscopique, en utilisant la mesure de la position angulaire du cardan effectuée par le capteur de position et la mesure de la vitesse de rotation du volant d'inertie effectuée par le capteur de vitesse, l'attitude du satellite étant déterminée en utilisant l'incrément angulaire et la mesure d'attitude du satellite effectuée par le capteur d'attitude.

Dans des modes particuliers de réalisation, les moyens de calcul comprennent un filtre d'estimation, par exemple un filtre de Kalman, qui reçoit en entrée l'incrément angulaire et la mesure d'attitude du satellite, et qui fournit en sortie une estimation de l'attitude du satellite.

Dans des modes particuliers de réalisation, le satellite étant un satellite d'observation alternant des phases de contrôle d'attitude différentes comportant des phases de manœuvre et des phases de prise d'image, les moyens de calcul sont configurés pour appliquer des coefficients de pondération pour pondérer les contributions respectives, lors de la détermination attitude, de la mesure du capteur d'attitude d'une part et, d'autre part, des mesures du capteur de position et du capteur de vitesse, les coefficients de pondération dépendant de la phase de contrôle d'attitude en cours et étant déterminés pour :

- lors des phases de manœuvre : augmenter la contribution de la mesure du capteur d'attitude par rapport à la contribution des mesures du capteur de position et du capteur de vitesse,
- lors des phases de prise d'image : augmenter la contribution des mesures du capteur de position et du capteur de vitesse par rapport à la contribution des mesures du capteur d'attitude.

Dans des modes particuliers de réalisation, le cardan de l'au moins un actionneur gyroscopique étant articulé en rotation autour de deux axes différents et le capteur de position étant apte à mesurer les positions angulaires respectives du cardan autour desdits deux axes de rotation, les moyens de calcul sont configurés pour déterminer l'attitude du satellite en utilisant les mesures des positions angulaires respectives dudit cardan autour desdits deux axes de rotation, effectuées par le capteur de position.

Dans des modes particuliers de réalisation, le système de contrôle d'attitude comportant plusieurs actionneurs gyroscopiques comportant chacun un cardan, un volant d'inertie, un capteur de position et un capteur de vitesse, les moyens de calcul sont configurés pour déterminer l'attitude du satellite en utilisant les mesures des positions angulaires des cardans effectuées par les capteurs de position, les mesures des vitesses de rotation des volants d'inertie effectuées par les capteurs de vitesse et la mesure d'attitude du satellite effectuée par le capteur d'attitude.

Selon un second aspect, la présente invention concerne un satellite comportant un système de contrôle d'attitude comportant au moins un actionneur gyroscopique, ledit au moins un actionneur gyroscopique comportant un volant d'inertie monté mobile en rotation autour d'un axe de rotation, ledit volant d'inertie étant porté par un cardan articulé en rotation autour d'un axe de rotation. Le satellite comporte un dispositif de détermination d'attitude selon l'un quelconque des modes de réalisation de l'invention.

Dans des modes particuliers de réalisation, le satellite est dépourvu de gyromètre.

Selon un troisième aspect, la présente invention concerne un procédé de détermination d'une attitude d'un satellite, ledit satellite étant muni d'un système de contrôle d'attitude comportant au moins un actionneur gyroscopique, ledit au moins un actionneur gyroscopique comportant un volant d'inertie monté mobile en rotation autour d'un axe de rotation, ledit volant d'inertie étant porté par un cardan articulé en rotation autour d'un axe de rotation, le satellite comportant en outre un capteur d'attitude apte à mesurer l'attitude dudit satellite. L'au moins un actionneur gyroscopique étant préalablement muni d'un capteur de position apte à mesurer la position angulaire du cardan autour de son axe de rotation, et d'un capteur de vitesse apte à mesurer la vitesse de rotation du volant d'inertie autour de son axe de rotation, le procédé comporte des étapes de :

- mesure de la position angulaire du cardan autour de son axe de rotation au moyen dudit capteur de position,
- mesure de la vitesse de rotation du volant d'inertie autour de son axe de rotation au moyen dudit capteur de vitesse,
- mesure de l'attitude du satellite au moyen dudit capteur d'attitude,
- détermination de l'attitude du satellite en utilisant la mesure de la position angulaire du cardan effectuée par le capteur de position, la mesure de la vitesse de rotation du volant d'inertie effectuée par le capteur de vitesse et la mesure d'attitude du satellite effectuée par le capteur d'attitude.

Dans des modes particuliers de mise en œuvre, le procédé de détermination d'attitude peut comporter en outre l'une ou plusieurs des caractéristiques suivantes, prises isolément ou selon toutes les combinaisons techniquement possibles.

Dans des modes particuliers de mise en œuvre, le procédé de détermination d'attitude comporte une étape de détermination d'une grandeur, dite incrément angulaire, représentative de la variation d'attitude du satellite induite par l'au moins un actionneur gyroscopique, en utilisant la mesure de la position angulaire du cardan effectuée par le capteur de position et la mesure de la vitesse de rotation du volant d'inertie effectuée par le capteur de vitesse, l'attitude du satellite étant déterminée en utilisant l'incrément angulaire et la mesure d'attitude du satellite effectuée par le capteur d'attitude.

Dans des modes particuliers de mise en œuvre, l'attitude du satellite est déterminée au moyen d'un filtre de Kalman.

Dans des modes particuliers de mise en œuvre, le satellite étant un satellite d'observation alternant des phases de contrôle d'attitude différentes comportant des phases de manœuvre et des phases de prise d'image, ledit procédé de détermination d'attitude comporte une utilisation de coefficients de pondération pour pondérer les contributions respectives, lors de la détermination attitude, de la mesure du capteur d'attitude d'une part et, d'autre part, des mesures du capteur de position et du capteur de vitesse, les coefficients de pondération dépendant de la phase de contrôle d'attitude en cours et étant déterminés pour :

- lors des phases de manoeuvre : augmenter la contribution de la mesure du capteur d'attitude par rapport à la contribution des mesures du capteur de position et du capteur de vitesse,
- lors des phases de prise d'image : augmenter la contribution des mesures du capteur de position et du capteur de vitesse par rapport à la contribution des mesures du capteur d'attitude.

Dans des modes particuliers de mise en œuvre, le cardan de l'au moins un actionneur gyroscopique étant articulé en rotation autour de deux axes différents et le capteur de position étant apte à mesurer les positions angulaires respectives du cardan autour desdits deux axes de rotation, l'attitude du satellite est déterminée en utilisant les mesures des positions angulaires respectives dudit cardan autour desdits deux axes de rotation, effectuées par le capteur de position.

Dans des modes particuliers de mise en œuvre, le système de contrôle d'attitude comportant plusieurs actionneurs gyroscopiques comportant chacun un cardan, un volant d'inertie, un capteur de position et un capteur de vitesse, l'attitude du satellite est déterminée en utilisant les mesures des positions angulaires des cardans effectuées par les capteurs de position, les mesures des vitesses de rotation des volants d'inertie effectuées par les capteurs de vitesse et la mesure d'attitude du satellite effectuée par le capteur d'attitude.

Selon un quatrième aspect, la présente invention concerne un produit programme d'ordinateur comportant un ensemble d'instructions de code de programme qui, lorsqu'elles sont exécutées par un processeur, configurent ledit processeur pour mettre en œuvre un procédé de détermination d'attitude selon l'un quelconque des modes de mise en œuvre de l'invention.

**Présentation des figures**

L'invention sera mieux comprise à la lecture de la description suivante, donnée à titre d'exemple nullement limitatif, et faite en se référant aux figures qui représentent :

- [Fig. 1] Figure 1 : une représentation schématique d'un satellite muni d'un dispositif de détermination d'attitude selon l'invention,
- [Fig. 2] Figure 2 : un diagramme illustrant les principales étapes d'un procédé de détermination d'attitude selon l'invention,
- [Fig. 3] Figure 3 : une représentation schématique d'un mode préféré de réalisation d'un circuit de traitement du dispositif de détermination d'attitude de la figure 1,
- [Fig. 4] Figure 4 : un diagramme illustrant un mode préféré de mise en œuvre d'une étape de détermination d'attitude par le circuit de traitement de la figure 3,
- [Fig. 5] Figure 5 : des courbes illustrant les performances du procédé de détermination d'attitude.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

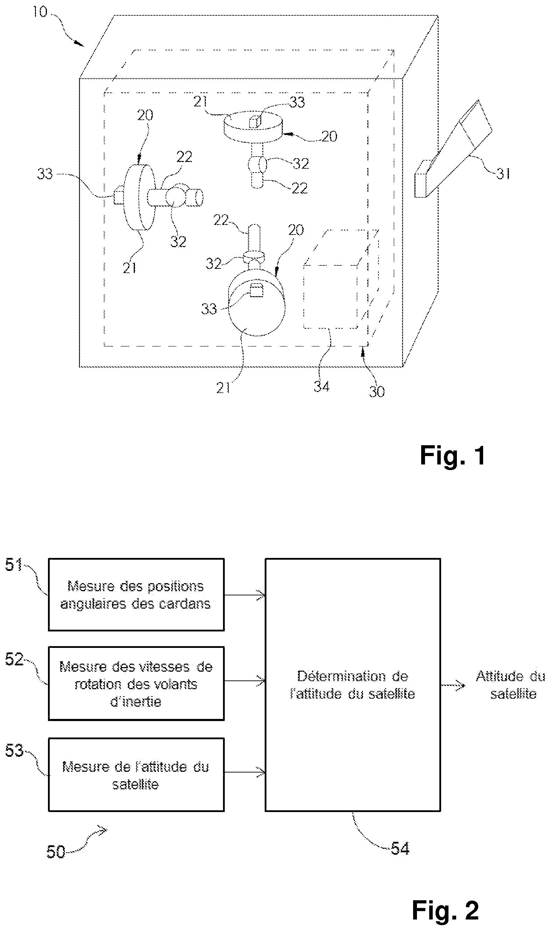

La figure 1 représente de façon très schématique un satellite 10 comportant notamment un système de contrôle d'attitude.

Le système de contrôle d'attitude comprend des actionneurs permettant de modifier l'attitude du satellite 10, dont au moins un actionneur gyroscopique 20, également connu sous le nom de « Control Moment Gyroscope » ou CMG dans la littérature anglo-saxonne.

Dans l'exemple de réalisation illustré par la figure 1, le système de contrôle d'attitude comprend trois actionneurs gyroscopiques 20. Rien n'exclut cependant, suivant d'autres modes de réalisation non illustrés par des figures, d'avoir un nombre différent d'actionneurs gyroscopiques.

Chaque actionneur gyroscopique 20 comporte un volant d'inertie 21 monté mobile en rotation autour d'un axe de rotation. En outre, ledit volant d'inertie 21 est porté par un cardan 22 articulé en rotation autour d'un axe de rotation, par exemple orthogonal à l'axe de rotation du volant d'inertie 21. Généralement, le volant d'inertie 21 tourne à une vitesse de rotation sensiblement constante, aux erreurs de contrôle près. Pour modifier l'attitude du satellite 10, l'axe de rotation du volant d'inertie 21 est incliné en faisant tourner le cardan 22 autour de son axe de rotation. La rotation du volant d'inertie 21 et du cardan 22 autour de leurs axes de rotation respectifs est par exemple contrôlée au moyen de moteurs électriques.

Pour contrôler l'attitude du satellite 10 suivant trois axes au moyen d'actionneurs gyroscopiques 20, il est généralement nécessaire de mettre en œuvre trois actionneurs gyroscopiques 20. Rien n'exclut cependant, suivant d'autres exemples, de considérer un nombre plus faible d'actionneurs gyroscopiques, par exemple si l'attitude du satellite 10 ne doit pas être contrôlée suivant trois axes, ou encore un nombre plus important d'actionneurs gyroscopiques 20, par exemple à des fins de redondance.

Il est également à noter que l'invention est applicable à des actionneurs gyroscopiques 20 comportant des cardans 22 dits deux axes, c'est-à-dire des cardans 22 articulés en rotation autour de deux axes de rotation différents (non parallèles). Dans la suite de la description, on se place de manière non limitative dans le cas où chaque cardan 22 est articulé en rotation autour d'un seul axe de rotation.

Le système de contrôle d'attitude comporte également un dispositif 30 de détermination de l'attitude du satellite 10.

Le dispositif 30 de détermination d'attitude comporte un capteur d'attitude 31, apte à mesurer l'attitude du satellite 10. De préférence, le capteur d'attitude 31 est de préférence un capteur optique, et comporte par exemple un ou plusieurs senseurs stellaires.

Tel qu'illustré par la figure 1, le dispositif 30 de détermination d'attitude comporte également, pour chaque actionneur gyroscopique 20 :

- un capteur de position 32 apte à mesurer la position angulaire du cardan 22 autour de son axe de rotation,
- un capteur de vitesse 33 apte à mesurer la vitesse de rotation du volant d'inertie 21 autour de son axe de rotation.

Par exemple, les capteurs de position 32 et/ou les capteurs de vitesse 33 sont des capteurs à effet de hall et/ou des codeurs optiques, considérés comme connus de l'homme du métier. L'invention est cependant applicable à d'autres types de capteurs de position 32 et/ou de capteurs de vitesse 33, et le choix d'un type particulier ne constitue qu'une variante possible d'implémentation de l'invention.

Le dispositif 30 de détermination d'attitude comprend également un circuit de traitement 34. Le circuit de traitement 34 est relié aux capteurs de position 32, aux capteurs de vitesse 33 et au capteur d'attitude 31.

Le circuit de traitement 34 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour effectuer tout ou partie des opérations nécessaires pour déterminer l'attitude du satellite 10.

Alternativement ou en complément, le circuit de traitement 34 comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie des opérations nécessaires pour déterminer l'attitude du satellite 10.

En d'autres termes, le circuit de traitement 34 correspond à des moyens configurés de façon logicielle (produit programme d'ordinateur spécifique) et/ou matérielle (FPGA, PLD, ASIC, composants électroniques discrets, circuit radioélectrique, etc.) pour effectuer tout ou partie des opérations nécessaires pour déterminer l'attitude du satellite 10.

La figure 2 représente schématiquement les principales étapes d'un procédé 50 de détermination d'attitude du satellite 10, dans le cas où le système de contrôle d'attitude comporte plusieurs actionneurs gyroscopiques 20. Tel qu'illustré par la figure 2, les principales étapes du procédé 50 de détermination d'attitude, mises en œuvre par le dispositif 30 de détermination d'attitude, sont les suivantes :

- 51 mesure des positions angulaires respectives des cardans 22 autour de leurs axes de rotation respectifs, au moyen des capteurs de position 32 respectifs desdits cardans 22,
- 52 mesure des vitesses de rotation respectives des volants d'inertie 21 autour de leurs axes de rotation respectifs, au moyen des capteurs de vitesse 33 respectifs desdits volants d'inertie 21,
- 53 mesure de l'attitude du satellite 10 au moyen du capteur d'attitude 31,
- 54 détermination, par le circuit de traitement 34, de l'attitude du satellite 10 en utilisant les mesures des positions angulaires des cardans 22, les mesures des vitesses de rotation des volants d'inertie 21 et la mesure d'attitude du satellite 10.

Ainsi, l'attitude du satellite 10 est déterminée non seulement en fonction de la mesure d'attitude fournie par le capteur d'attitude 31, mais également en fonction des mesures des positions angulaires des cardans 22 fournies par les capteurs de position 32 et en fonction des mesures des vitesses de rotation des volants d'inertie 21 fournies par les capteurs de vitesse 33.

En effet, du fait du principe de conservation du moment cinétique, les variations de la vitesse de rotation du satellite 10 sont liées aux variations des positions angulaires des cardans 22 et des vitesses de rotation des volants d'inertie 21 des actionneurs gyroscopiques 20. On comprend donc que les mesures des positions angulaires des cardans 22 et les mesures des vitesses de rotation des volants d'inertie 21 peuvent être avantageusement utilisées pour améliorer la précision de la détermination d'attitude du satellite 10 par rapport à une utilisation uniquement des mesures du capteur d'attitude 31. En effet, les mesures d'attitude fournies par le capteur d'attitude 31 étant bruitées, l'ajout des mesures faites par les capteurs de position 32 et par les capteurs de vitesse 33 permet de filtrer le bruit des mesures du capteur d'attitude 31.

En outre, la prise en compte des mesures des positions angulaires des cardans 22 et des mesures des vitesses de rotation des volants d'inertie 21 peut être une alternative à l'utilisation de mesures fournies par des gyromètres, de sorte qu'il est possible d'avoir un satellite 10 dépourvu de gyromètre(s).

Il est également à noter que l'utilisation des mesures des positions angulaires des cardans 22 et des vitesses de rotation des volants d'inertie 21 est efficace sous réserve que les actionneurs gyroscopiques 20 soient la principale source de variation de l'attitude du satellite 10. Ce sera par exemple le cas lorsque l'attitude du satellite 10 est contrôlée exclusivement par les actionneurs gyroscopiques 20, et lorsque les couples externes sont négligeables ou connus de façon précise (par exemple du fait qu'ils varient lentement) sur l'horizon de temps caractéristique au cours duquel on cherche à restituer les variations de l'attitude.

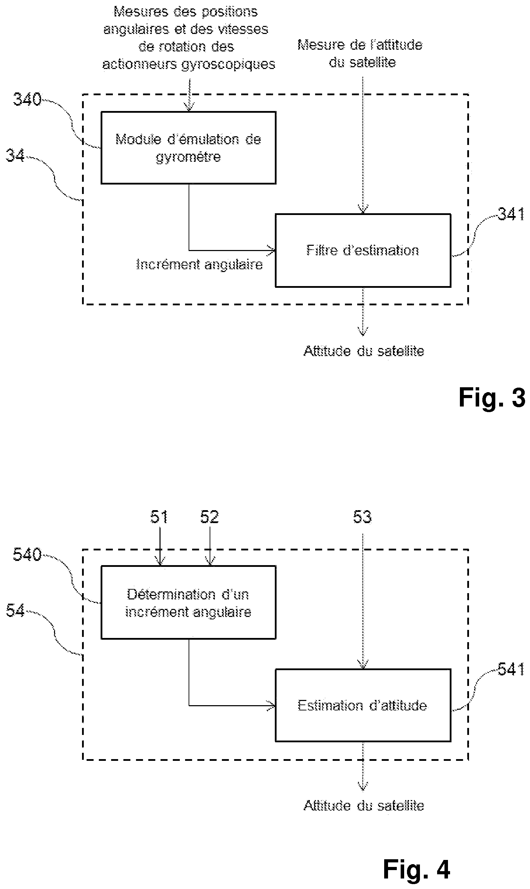

La figure 3 représente schématiquement un mode préféré de réalisation du circuit de traitement 34.

Dans l'exemple illustré par la figure 3, le circuit de traitement 34 comporte un module 340 d'émulation de gyromètre.

Le module 340 d'émulation de gyromètre détermine une grandeur (vecteur), dite incrément angulaire, représentative de la variation d'attitude du satellite 10 induite par l'action des actionneurs gyroscopiques 20, en utilisant les mesures des positions angulaires des cardans 22 effectuées par les capteurs de position 32 et les mesures des vitesses de rotation des volants d'inertie 21 effectuées par les capteurs de vitesse 33.

Le circuit de traitement 34 comporte également un filtre d'estimation 341 qui détermine l'attitude du satellite 10 en utilisant notamment l'incrément angulaire induit par l'action des actionneurs gyroscopiques 20, déterminé par le module 340 d'émulation de gyromètre, et la mesure d'attitude du satellite 10 effectuée par le capteur d'attitude 31.

Si les couples externes ne sont pas négligeables, le circuit de traitement 34 peut également prendre en compte, pour déterminer l'attitude du satellite 10, un autre incrément angulaire, représentatif de la variation d'attitude du satellite 10 induite par l'action des couples externes sur ledit satellite 10. L'estimation d'un tel incrément angulaire induit par l'action des couples externes sur le satellite 10 peut mettre en œuvre toute méthode connue de l'homme du métier, et sort du cadre de l'invention. Par exemple, l'incrément angulaire induit par l'action des couples externes sur le satellite 10 peut être calculé également par le module 340 d'émulation de gyromètre, qui calcule alors un incrément angulaire total qui correspond à la somme entre d'une part l'incrément angulaire induit par l'action des actionneurs gyroscopiques 20 et, d'autre part, l'incrément angulaire induit par l'action des couples externes sur le satellite 10. Suivant un autre exemple, le module 340 d'émulation de gyromètre calcule uniquement l'incrément angulaire induit par l'action des actionneurs gyroscopiques 20, et c'est par exemple le filtre d'estimation 341 qui peut calculer l'incrément angulaire induit par l'action des couples externes.

Lorsque les couples externes sont négligeables et/ou lorsque le module 340 d'émulation de gyromètre calcule un incrément angulaire total, l'avantage du mode de réalisation illustré par la figure 3 réside dans le fait que le même filtre d'estimation 341 peut être utilisé à la fois :

- dans un satellite dépourvu de gyromètres, en utilisant des capteurs de position 32 et des capteurs de vitesse 33, et en fournissant en entrée du filtre d'estimation 341 l'incrément angulaire fourni par le module 340 d'émulation de gyromètre,
- dans un satellite comportant un ou plusieurs gyromètres, en fournissant en entrée du filtre d'estimation 341 l'incrément angulaire fourni par le ou les gyromètres.

Par conséquent, il n'est pas nécessaire de développer des filtres d'estimation différents pour d'une part les satellites dépourvus de gyromètres et, d'autre part, pour les satellites comportant un ou plusieurs gyromètres. Le même filtre d'estimation 341 peut être utilisé dans les deux cas, et il suffit de prévoir un module 340 d'émulation de gyromètre dans le cas où le satellite 10 est dépourvu de gyromètre. Un tel module 340 d'émulation de gyromètre peut également être prévu dans un satellite embarquant un ou plusieurs gyromètres, pour pallier une éventuelle défaillance desdits gyromètres.

De manière générale, le filtre d'estimation 341 peut être tout type de filtre dynamique d'estimation, et/ou tout type de filtre statique à gains constants, linéaire ou non linéaire. Dans des modes préférés de réalisation, le filtre d'estimation 341 est par exemple un filtre de Kalman. De manière générale, tout type de filtre de Kalman peut être mis en œuvre, et le choix d'un type particulier de filtre de Kalman ne constitue qu'une variante d'implémentation de l'invention. Le filtre d'estimation 341 peut être par exemple, de manière nullement limitative, un filtre de Kalman non stationnaire non linéaire, également connu sous le nom de filtre de Kalman étendu (Extended Kalman Filter » ou EKF dans la littérature anglo-saxonne).

La figure 4 représente schématiquement les principales étapes de l'étape 54 de détermination d'attitude du satellite 10, dans le cas où le circuit de traitement 34 comporte un module 340 d'émulation de gyromètre tel qu'illustré par la figure 3. Tel qu'illustré par la figure 4, l'étape 54 de détermination d'attitude comporte des étapes de :

- 540 détermination de l'incrément angulaire, représentative de la variation d'attitude du satellite 10 induite par l'action des actionneurs gyroscopiques 20, en utilisant notamment les mesures des positions angulaires des cardans 22 effectuées par les capteurs de position 32 et les mesures des vitesses de rotation des volants d'inertie 21 effectuées par les capteurs de vitesse 33,
- 541 estimation de l'attitude du satellite 10, par le filtre d'estimation 341, en utilisant notamment l'incrément angulaire induit par les actionneurs gyroscopiques 20 (éventuellement inclus dans un incrément angulaire total) et la mesure d'attitude du satellite 10 effectuée par le capteur d'attitude 31.

On décrit à présent un exemple non limitatif de calcul de l'incrément angulaire induit par les actionneurs gyroscopiques 20 à l'échelle du satellite 10, par le module 340 d'émulation de gyromètre.

Dans la suite de la description, on considère que le satellite 10 comporte $N_{act}$ actionneurs gyroscopiques 20, et on désigne par :

- $\hat{J}_{sat}$ la matrice d'inertie du satellite 10 (par exemple exprimée en kg·m$^2$),
- $\hat{J}_k$ l'inertie radiale du volant d'inertie 21 de l'actionneur gyroscopique 20 de rang $k$ ($1 \le k \le N_{act}$) (par exemple exprimée en kg·m$^2$),
- $\hat{j}_k^{gimb}$ l'inertie radiale du cardan 22 de l'actionneur gyroscopique 20 de rang $k$ ($1 \le k \le N_{act}$) (par exemple exprimée en kg·m$^2$),
- $(\widehat{u_k},\ \widehat{v_k},\ \widehat{w_k})$ les vecteurs unitaires d'un repère de l'actionneur gyroscopique 20 de rang $k$ ($1 \le k \le N_{act}$), exprimés dans un repère satellite,
- $\omega_k(t_n)$ la vitesse de rotation mesurée du volant d'inertie 21 de l'actionneur gyroscopique 20 de rang $k$ ($1 \le k \le N_{act}$) à l'instant $t_n$ (par exemple exprimée en rad/s),
- $(\sigma_k(t_n)$ la position angulaire mesurée du cardan 22 de l'actionneur gyroscopique 20 de rang $k$ ($1 \le k \le N_{act}$) à l'instant $t_n$ (par exemple exprimée en rad),
- $\Delta t_{aocs} = t_n - t_{n\text{-}1}$ la période d'échantillonnage considérée pour la détermination d'attitude et le contrôle d'attitude.

Avec de telles notations, alors l'incrément angulaire, induit par l'action des actionneurs gyroscopiques 20 entre deux instants $t_{n\text{-}1}$ et $t_n$, désigné par $\underline{\Phi}_{ACT}[t_{n\text{-}1}, t_n]$, est par exemple déterminé selon l'expression suivante :

[Math. 1]

$$\underline{\Phi}_{ACT}[t_{n-1}, t_n] = -\hat{J}_{sat}^{-1} \sum_{N_{act}} \left( \hat{J}_k \left( C_k \widehat{u_k} + S_k \widehat{v_k} \right) + \hat{j}_k^{gimb} \left( \sigma_k(t_n) - \sigma_k(t_{n-1}) \right) \widehat{w_k} \right)$$

expression dans laquelle :

[Math. 2]

$$C_k = \overline{\omega} \Delta t_{aocs} \left( 1 - \frac{\dot{\sigma}^2 \Delta t_{aocs}{}^2}{24} \right) cos\overline{\sigma} - \frac{\gamma \dot{\sigma} \Delta t_{aocs}{}^3}{12} sin\overline{\sigma}$$

[Math. 3]

$$S_k = \overline{\omega}\Delta t_{aocs}\left(1 - \frac{\dot{\sigma}^2 {\Delta t_{aocs}}^2}{24}\right)sin\overline{\sigma} + \frac{\gamma\dot{\sigma}{\Delta t_{aocs}}^3}{12}cos\overline{\sigma}$$

[Math. 4]

$$\overline{\omega} = \frac{\omega_k(t_{n-1}) + \omega_k(t_n)}{2}$$

[Math. 5]

$$\overline{\sigma} = \frac{\sigma_k(t_{n-1}) + \sigma_k(t_n)}{2}$$

[Math. 6]

$$\dot{\sigma} = \frac{\sigma_k(t_n) - \sigma_k(t_{n-1})}{\Delta t_{aocs}}$$

[Math. 7]

$$\gamma = \frac{\omega_k(t_n) - \omega_k(t_{n-1})}{\Delta t_{aocs}}$$

En pratique, cela revient donc à combiner les mesures des vitesses de rotation des volants d'inertie 21 et les mesures des positions angulaires des cardans 22 pour reconstruire le moment cinétique courant induit par les actionneurs gyroscopiques 20, projeté dans le repère satellite. Le moment cinétique courant est ensuite intégré entre deux instants de mesure, puis multiplié par l'inverse de la matrice d'inertie du satellite 10 de façon à obtenir l'incrément angulaire recherché pour les actionneurs gyroscopiques 20.

Tel qu'indiqué précédemment, grâce au module 340 d'émulation de gyromètre, lorsqu'il détermine un incrément angulaire semblable à ce que fournirait en sortie un gyromètre (incrément angulaire induit par l'action des actionneurs gyroscopiques 20 si les couples externes sont négligeables, ou incrément angulaire total dans le cas contraire), il est possible d'utiliser un filtre d'estimation 341 prévu pour fonctionner avec un ou plusieurs gyromètres. Par conséquent, en sortie du module 340 d'émulation de gyromètre, il est possible d'utiliser tout filtre d'estimation mis en œuvre dans l'art antérieur pour déterminer l'attitude d'un satellite 10 à partir de mesures fournies par des gyromètres et à partir de mesures fournies par un capteur d'attitude 31.

On décrit ci-après, succinctement, un exemple nullement limitatif de filtre d'estimation 341 pouvant être mis en œuvre dans le circuit de traitement 34, dans le cas où le filtre d'estimation 341 est un filtre de Kalman, par exemple un filtre de Kalman non stationnaire non linéaire.

De manière connue en soi, un filtre de Kalman met en œuvre plusieurs étapes qui sont exécutées de manière itérative. A chaque itération, le filtre de Kalman comporte principalement deux phases distinctes bien connues de l'homme du métier, à savoir une phase de prédiction et une phase de mise à jour, qui visent à estimer l'état dudit filtre de Kalman. Dans le cas présent, l'état du filtre de Kalman comporte au moins l'attitude du satellite 10, par exemple exprimée sous la forme de quaternion. L'état du filtre de Kalman peut également comporter d'autres grandeurs à estimer, comme par exemple le moment cinétique total, les couples externes, etc.).

De manière générale, dans un filtre de Kalman, la phase de prédiction utilise l'état estimé de l'instant précédent pour produire une prédiction de l'état pour l'instant courant. Dans l'étape de mise à jour, les mesures de l'instant courant sont utilisées pour corriger l'état prédit dans le but d'obtenir une estimation plus précise de l'état pour l'instant courant.

De manière connue en soi, un filtre de Kalman met en œuvre à chaque itération, notamment, des étapes de :

- prédiction de l'état du filtre de Kalman, c'est-à-dire de prédiction d'au moins l'attitude du satellite 10, en fonction notamment de l'état estimé à l'instant précédent,

- calcul d'une matrice de covariance de bruit de processus,
- calcul d'une matrice de covariance d'erreur de l'état prédit, en fonction notamment de la matrice de covariance d'erreur de l'état estimée à l'instant précédent et de la matrice de covariance de bruit de processus,
- calcul d'une innovation, en fonction notamment de l'état prédit et des mesures de l'instant courant,
- calcul de gains de Kalman, en fonction notamment de la matrice de covariance d'erreur de l'état prédit, et d'une matrice de covariance d'erreur de mesure d'attitude,
- mise à jour de l'état du filtre de Kalman, et donc de l'attitude du satellite 10, en fonction notamment de l'état prédit, de l'innovation et des gains de Kalman,
- mise à jour de la matrice de covariance d'erreur de l'état, en fonction notamment de la matrice de covariance d'erreur de l'état prédit et des gains de Kalman.

Par exemple, l'étape de prédiction de l'état (contenant notamment l'attitude, par exemple exprimée sous la forme de quaternion) du filtre de Kalman peut calculer l'état prédit à partir d'un incrément angulaire total fourni par le module 340 d'émulation de gyromètre, selon un algorithme d'Edwards.

Si le module 340 d'émulation de gyromètre ne fournit que l'incrément angulaire induit par l'action des actionneurs gyroscopiques 20, et si les couples externes ne sont pas négligeables, alors l'étape de prédiction de l'état met en œuvre de préférence un algorithme itératif qui actualise à chaque itération un incrément angulaire induit par l'action des couples externes sur le satellite 10.

L'algorithme de prédiction itératif se présente par exemple sous la forme suivante pour prédire le quaternion d'attitude :

- à l'instant $t_n$, le quaternion $Q_{iter}$ est initialisé comme le quaternion estimé à l'instant précédent $\hat{Q}(t_{n-1})$,
- on calcule un quaternion par intégration de l'incrément angulaire total (action des actionneurs gyroscopiques et action des couples externes) en utilisant l'algorithme d'Edwards :

[Math. 8]

$$Q_{iter} = \hat{Q}(t_{n-1}) \begin{pmatrix} 1 - \dfrac{\Phi(t_n)^2}{8} \\ \dfrac{1}{2}\left(1 - \dfrac{\Phi(t_n)^2}{24}\right)\underline{\Phi}(t_n) + \dfrac{\underline{\Phi}(t_{n-1}) \times \underline{\Phi}(t_n)}{24} \end{pmatrix}$$

expression dans laquelle $\underline{\Phi}$ est l'incrément angulaire total et correspond à $\underline{\Phi} = \underline{\Phi}_{ACT} + \underline{\Phi}_H$, où $\underline{\Phi}_H$ est l'incrément angulaire induit par l'action des couples externes et dépend du quaternion $Q_{iter}$ de l'itération précédente (pour exprimer le moment cinétique total dans le repère satellite), et $\underline{\Phi}_{ACT}$ correspond à l'incrément angulaire induit par les actionneurs gyroscopiques 20, explicité ci-avant,

- l'algorithme itératif s'arrête au moment où l'écart entre deux quaternions $Q_{iter}$ successifs est suffisamment faible.

Le calcul de l'innovation correspond par exemple à une différence entre l'état (quaternion) prédit et la mesure fournie par le capteur d'attitude 31 pour l'instant courant. En d'autres termes, l'incrément angulaire total, déterminé en utilisant notamment les mesures des capteurs de position 32 et des capteurs de vitesse 33, n'est pas injecté en tant que mesure au cours du calcul de l'innovation. L'incrément angulaire total est par contre utilisé pour calculer l'état (quaternion) prédit, tel qu'indiqué ci-dessus.

Ensuite, le quaternion (état du filtre de Kalman) est mis à jour en fonction du quaternion prédit, de l'innovation et des gains de Kalman.

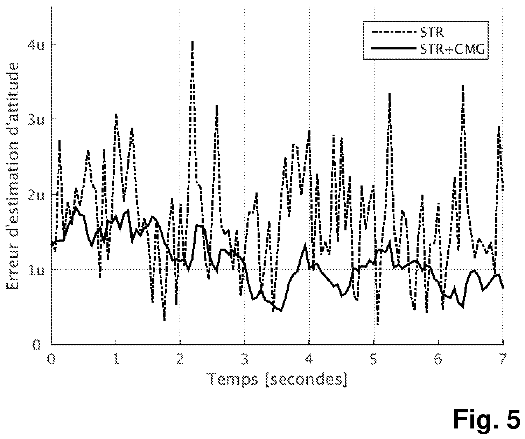

La figure 5 représente schématiquement des courbes illustrant les performances du procédé 50 de détermination d'attitude. Plus particulièrement, la figure 5 représente l'évolution, au cours du temps, de l'erreur commise sur l'attitude déterminée :

- lorsque l'attitude est déterminée uniquement en fonction des mesures du capteur d'attitude 31 (traits discontinus, référence « STR » sur la figure 5),
- lorsque l'attitude est déterminée en fonction des mesures du capteur d'attitude 31 et en fonction des mesures des capteurs de position 32 et des capteurs de vitesse 33 des actionneurs gyroscopiques, conformément à l'invention (traits continus, référence « STR + CMG » sur la figure 5).

Il est à noter que les unités en ordonnées sur la figure 5 ne sont pas données de manière absolue mais uniquement de manière relative. Toutefois, les échelles sont identiques entre les deux courbes, STR d'une part et (STR + CMG) d'autre part. On constate que la prise en compte des mesures des capteurs de position 32 et des capteurs de vitesse 33 améliore les performances de détermination d'attitude d'un facteur pouvant aller jusqu'à 4 (en moyenne d'un facteur 2). Surtout, le niveau de bruit est bien inférieur, ce qui constitue un avantage non négligeable compte tenu des exigences souvent importantes sur la stabilité de pointage (notamment pour des applications de prises d'images pour un rendu « net »).

Dans des modes préférés de mise en œuvre de l'étape 54 de détermination d'attitude, il peut être avantageux, lors de la détermination d'attitude, d'appliquer des coefficients de pondération respectifs différents sur d'une part la contribution des mesures fournies par le capteur d'attitude 31 et, d'autre part, la contribution des mesures fournies par les capteurs de position 32 et les capteurs de vitesse 33 des actionneurs gyroscopiques 20.

De telles dispositions sont particulièrement avantageuses, notamment, dans le cas d'un satellite d'observation alternant des phases de manœuvre et des phases de prise d'image. Il est à noter qu'il est possible de prévoir d'autres phases de contrôle d'attitude. En particulier, il est possible, de manière connue, de prévoir une phase de tranquillisation entre chaque phase de manœuvre et chaque phase de prise d'image.

Lors d'une phase de manœuvre, qui est une phase à forte dynamique impliquant un basculement d'une première attitude de consigne vers une seconde attitude de consigne, les mesures fournies par les capteurs de position 32 et les capteurs de vitesse 33 sont moins précises que les mesures fournies par le capteur d'attitude 31. On comprend donc que, lors d'une phase de manœuvre, il est avantageux de privilégier les mesures fournies par le capteur d'attitude 31.

A contrario, lors d'une phase de prise d'image, l'attitude doit être stabilisée autour d'une attitude de consigne. La dynamique est par conséquent beaucoup plus faible et les performances de la détermination d'attitude peuvent être limitées par le bruit de mesure du capteur d'attitude 31. Par conséquent, il peut être avantageux, lors des phases de prise d'image, de prendre en compte les mesures fournies par les capteurs de position 32 et les capteurs de vitesse 33, afin de filtrer le bruit de mesure du capteur d'attitude 31.

Dans le cas par exemple du filtre de Kalman décrit ci-dessus, les mesures du capteur d'attitude 31 sont utilisées pour calculer l'innovation, qui est ensuite multipliée par les gains de Kalman lors de l'étape de mise à jour de l'état prédit, ledit état prédit étant calculé en utilisant l'incrément angulaire total (c'est-à-dire en utilisant notamment les mesures des capteurs de position 32 et des capteurs de vitesse 33 des actionneurs gyroscopiques 20). Par conséquent, il est possible de déterminer les gains de Kalman en fonction de la phase de contrôle d'attitude afin d'avoir des gains de Kalman plus importants lors des phases de manœuvre que lors des phases de prise d'image. De la sorte, les mesures du capteur d'attitude 31 sont davantage prises en compte lors des phases de manœuvre que lors des phases de prise d'image.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement un circuit de traitement 34 comportant un module 340 d'émulation de gyromètre. Il est cependant à noter que l'invention est également applicable sans module 340 d'émulation de gyromètre. Par exemple, il est possible de fournir les mesures des capteurs de position 32 et des capteurs de vitesse 33 des actionneurs gyroscopiques 20 directement en entrée du filtre d'estimation 341. Le cas échéant, les calculs effectués par le module 340 d'émulation de gyromètre peuvent par exemple être intégrés dans ledit filtre d'estimation 341.

En outre, l'invention a été décrite en considérant principalement des cardans 22 articulés en rotation autour d'un axe de rotation unique. Toutefois, l'invention est également applicable, notamment, dans le cas de cardans 22 deux axes. Le cas échéant, chaque capteur de position 32 étant apte à mesurer les positions angulaires respectives du cardan 22 autour desdits deux axes de rotation, l'attitude du satellite 10 est déterminée en utilisant les mesures des positions angulaires respectives de chaque cardan 22 autour de ses deux axes de rotation, effectuées par le capteur de position 32.

La description ci-avant illustre clairement que, par ses différentes caractéristiques, la présente invention atteint les objectifs fixés.

En particulier, on comprend que, du fait de l'utilisation des mesures des positions angulaires des cardans et des mesures des vitesses de rotation des volants d'inertie pour déterminer l'attitude du satellite 10, on pourra dans certains cas avoir un satellite 10 dépourvu de gyromètres.

L'invention est cependant également applicable à des satellites équipés de gyromètres, les mesures des capteurs de position 32 et des capteurs de vitesse 33 pouvant être utilisées en complément des mesures des gyromètres, et/ou en relais desdites mesures des gyromètres lorsque ceux-ci sont défaillants.

L'invention est applicable à tout satellite dont l'attitude doit être déterminée. En outre, l'attitude déterminée pour le satellite 10 peut être utilisée pour contrôler l'attitude du satellite 10. Par exemple, le système de contrôle d'attitude peut contrôler les actionneurs gyroscopiques 20 en fonction de la différence entre l'attitude déterminée et une attitude de consigne dudit satellite 10, afin de faire converger l'attitude dudit satellite 10 vers l'attitude de consigne. L'attitude déterminée pour le satellite 10 peut également être utilisée pour effectuer un traitement a posteriori de données acquises par ce satellite 10. Par exemple, dans le cas d'un satellite 10 d'observation de la Terre ou de tout autre corps céleste, l'attitude déterminée peut être transmise à une station sol avec les images acquises par le satellite 10, afin de compenser dans lesdites images des déformations géométriques introduites par les variations d'attitude du satellite lors de l'acquisition de ces images.

**Revendications**

1. - Dispositif (30) de détermination d'une attitude d'un satellite (10), ledit satellite étant muni d'un système de contrôle d'attitude comportant au moins un actionneur gyroscopique (20), ledit au moins un actionneur gyroscopique comportant un volant d'inertie (21) monté mobile en rotation autour d'un axe de rotation, ledit volant d'inertie étant porté par un cardan (22) articulé en rotation autour d'un axe de rotation, ledit dispositif (30) comportant un capteur d'attitude (31) apte à mesurer l'attitude dudit satellite,
ledit dispositif (30) comportant:

   - un capteur de position (32) apte à mesurer la position angulaire du cardan (22) autour de son axe de rotation,
   - un capteur de vitesse (33) apte à mesurer la vitesse de rotation du volant d'inertie (21),
   - des moyens (34) de calcul configurés pour déterminer l'attitude du satellite (10) en utilisant la mesure de la position angulaire du cardan (22) effectuée par le capteur de position (32), la mesure de la vitesse de rotation du volant d'inertie (21) effectuée par le capteur de vitesse (33) et la mesure d'attitude du satellite (10) effectuée par le capteur d'attitude (31).

2. - Dispositif (30) selon la revendication 1, **caractérisé en ce que** le capteur d'attitude (31) comporte un ou plusieurs senseurs stellaires.

3. - Dispositif (30) selon l'une quelconque des revendications 1 à 2, dans lequel les moyens (34) de calcul comprennent un module (340) d'émulation de gyromètre configuré pour déterminer une grandeur, dite incrément angulaire, représentative de la variation d'attitude du satellite (10) induite par l'au moins un actionneur gyroscopique (20), en utilisant la mesure de la position angulaire du cardan (22) effectuée par le capteur de position (32) et la mesure de la vitesse de rotation du volant d'inertie (21) effectuée par le capteur de vitesse (33), l'attitude du satellite (10) étant déterminée en utilisant l'incrément angulaire et la mesure d'attitude du satellite (10) effectuée par le capteur d'attitude (31).

4. - Dispositif (30) selon la revendication 3, dans lequel les moyens (34) de calcul comprennent un filtre d'estimation qui reçoit en entrée l'incrément angulaire et la mesure d'attitude du satellite (10), et qui fournit en sortie une estimation de l'attitude du satellite (10).

5. - Dispositif (30) selon l'une quelconque des revendications 1 à 4, dans lequel, le satellite (10) étant un satellite d'observation alternant des phases de contrôle d'attitude différentes comportant des phases de manœuvre et des phases de prise d'image, les moyens (34) de calcul sont configurés pour appliquer des coefficients de pondération pour pondérer les contributions respectives, lors de la détermination d'attitude, de la mesure du capteur d'attitude (31) d'une part et, d'autre part, des mesures du capteur de position (32) et du capteur de vitesse (33), les coefficients de pondération dépendant de la phase de contrôle d'attitude en cours et étant déterminés pour :

   - lors des phases de manoeuvre : augmenter la contribution de la mesure du capteur d'attitude (31) par rapport à la contribution des mesures du capteur de position (32) et du capteur de vitesse (33),
   - lors des phases de prise d'image : augmenter la contribution des mesures du capteur de position (32) et du capteur de vitesse (33) par rapport à la contribution des mesures du capteur d'attitude (31).

6. - Dispositif (30) selon l'une quelconque des revendications 1 à 5, dans lequel, le cardan (22) de l'au moins un actionneur gyroscopique étant articulé en rotation autour de deux axes différents et le capteur de position (32) étant apte à mesurer les positions angulaires respectives du cardan (22) autour desdits deux axes de rotation, les moyens (34) de calcul sont configurés pour déterminer l'attitude du satellite (10) en utilisant les mesures des positions angulaires respectives dudit cardan (22) autour desdits deux axes de rotation, effectuées par le capteur de position (32).

7. - Dispositif (30) selon l'une quelconque des revendications 1 à 6, dans lequel, le système de contrôle d'attitude comportant plusieurs actionneurs gyroscopiques (20) comportant chacun un cardan (22), un volant d'inertie (21), un capteur de position (32) et un capteur de vitesse (33), les moyens (34) de calcul sont configurés pour déterminer l'attitude du satellite (10) en utilisant les mesures des positions angulaires des cardans (22) effectuées par les capteurs de position (32), les mesures des vitesses de rotation des volants d'inertie (21) effectuées par les capteurs de vitesse (33) et la mesure d'attitude du satellite (10) effectuée par le capteur d'attitude (31).

8. - Satellite (10) comportant un système de contrôle d'attitude comportant au moins un actionneur gyroscopique (20), ledit au moins un actionneur gyroscopique comportant un volant d'inertie (21) monté mobile en rotation autour d'un axe de rotation, ledit volant d'inertie étant porté par un cardan (22) articulé en rotation autour d'un axe de rotation, **caractérisé en ce qu'il** comporte un dispositif (30) de détermination d'attitude selon l'une quelconque des revendications 1 à 7.

9. - Satellite (10) selon la revendication 8, **caractérisé en ce qu'**il est dépourvu de gyromètre.

10. - Procédé (50) de détermination d'une attitude d'un satellite (10), ledit satellite étant muni d'un système de contrôle d'attitude comportant au moins un actionneur gyroscopique (20), ledit au moins un actionneur gyroscopique comportant un volant d'inertie (21) monté mobile en rotation autour d'un axe de rotation, ledit volant d'inertie étant porté par un cardan (22) articulé en rotation autour d'un axe de rotation, le satellite (10) comportant en outre un capteur d'attitude (31) apte à mesurer l'attitude dudit satellite, l'au moins un actionneur gyroscopique (20) étant préalablement muni d'un capteur de position (32) apte à mesurer la position angulaire du cardan (22) autour de son axe de rotation, et d'un capteur de vitesse (33) apte à mesurer la vitesse de rotation du volant d'inertie (21) autour de son axe de rotation, le procédé comporte des étapes de :

- (51) mesure de la position angulaire du cardan (22) autour de son axe de rotation au moyen dudit capteur de position (32),
- (52) mesure de la vitesse de rotation du volant d'inertie (21) autour de son axe de rotation au moyen dudit capteur de vitesse (33),
- (53) mesure de l'attitude du satellite (10) au moyen dudit capteur d'attitude (31),
- (54) détermination de l'attitude du satellite en utilisant la mesure de la position angulaire du cardan (22) effectuée par le capteur de position (32), la mesure de la vitesse de rotation du volant d'inertie (21) effectuée par le capteur de vitesse (33) et la mesure d'attitude du satellite (10) effectuée par le capteur d'attitude (31).

11. - Procédé (50) selon la revendication 10, comportant une étape de détermination d'une grandeur, dite incrément angulaire, représentative de la variation d'attitude du satellite (10) induite par l'au moins un actionneur gyroscopique (20), en utilisant la mesure de la position angulaire du cardan (22) effectuée par le capteur de position (32) et la mesure de la vitesse de rotation du volant d'inertie (21) effectuée par le capteur de vitesse (33), l'attitude du satellite (10) étant déterminée en utilisant l'incrément angulaire et la mesure d'attitude du satellite (10) effectuée par le capteur d'attitude (31).

12. - Procédé (50) selon l'une quelconque des revendications 10 à 11, dans lequel, le satellite (10) étant un satellite d'observation alternant des phases de contrôle d'attitude différentes comportant des phases de manœuvre et des phases de prise d'image, ledit procédé (50) comporte une utilisation de coefficients de pondération pour pondérer les contributions respectives, lors de la détermination attitude, de la mesure du capteur d'attitude (31) d'une part et, d'autre part, des mesures du capteur de position (32) et du capteur de vitesse (33), les coefficients de pondération dépendant de la phase de contrôle d'attitude en cours et étant déterminés pour :

- lors des phases de manoeuvre : augmenter la contribution de la mesure du capteur d'attitude (31) par rapport à la contribution des mesures du capteur de position (32) et du capteur de vitesse (33),
- lors des phases de prise d'image : augmenter la contribution des mesures du capteur de position (32) et du capteur de vitesse (33) par rapport à la contribution des mesures du capteur d'attitude (31).

13. - Procédé (50) selon l'une quelconque des revendications 10 à 12, dans lequel, le cardan (22) de l'au moins un actionneur gyroscopique étant articulé en rotation autour de deux axes différents et le capteur de position (32) étant apte à mesurer les positions angulaires respectives du cardan (22) autour desdits deux axes de rotation, l'attitude du satellite (10) est déterminée en utilisant les mesures des positions angulaires respectives dudit cardan (22) autour desdits deux axes de rotation, effectuées par le capteur de position (32).

14. - Procédé (50) selon l'une quelconque des revendications 10 à 13, dans lequel, le système de contrôle d'attitude comportant plusieurs actionneurs gyroscopiques (20) comportant chacun un cardan (22), un volant d'inertie (21), un capteur de position (32) et un capteur de vitesse (33), l'attitude du satellite (10) est déterminée en utilisant les mesures des positions angulaires des cardans (22) effectuées par les capteurs de position (32), les mesures des vitesses de rotation des volants d'inertie (21) effectuées par les capteurs de vitesse (33) et la mesure d'attitude du satellite (10) effectuée par le capteur d'attitude (31).

15. - Produit programme d'ordinateur, **caractérisé en ce qu'**il comporte un ensemble d'instructions de code de programme qui, lorsqu'elles sont exécutées par un processeur, configurent ledit processeur pour mettre en œuvre un procédé selon l'une quelconque des revendications 10 à 14.

**Patentansprüche**

1. Vorrichtung (30) zur Bestimmung einer Lage eines Satelliten (10), wobei der Satellit mit einem Lageregelungssystem ausgestattet ist, das wenigstens ein gyroskopisches Stellglied (20) umfasst, wobei das wenigstens eine gyroskopische Stellglied ein Schwungrad (21) umfasst, das um eine Drehachse drehbar gelagert ist, wobei das Schwungrad von einem Kardangelenk (22) getragen ist, das um eine Drehachse drehbar ist, wobei die Vorrichtung (30) einen Lagesensor (31) umfasst, der die Lage des Satelliten messen kann,
   wobei die Vorrichtung (30) umfasst:

   - einen Positionssensor (32), der die Winkelposition des Kardangelenks (22) um seine Drehachse messen kann,
   - einen Geschwindigkeitssensor (33), der die Drehgeschwindigkeit des Schwungrads (21) messen kann,
   - Rechenmittel (34), die dazu ausgebildet sind, die Lage des Satelliten (10) zu bestimmen, indem sie die Messung der Winkelposition des Kardangelenks (22) durch den Positionssensor (32), die Messung der Drehgeschwindigkeit des Schwungrads (21) durch den Geschwindigkeitssensor (33) und die Messung der Lage des Satelliten (10) durch den Lagesensor (31) nutzen.

2. Vorrichtung (30) nach Anspruch 1, **dadurch gekennzeichnet, dass** der Lagesensor (31) einen oder mehrere Sternsensoren umfasst.

3. Vorrichtung (30) nach einem der Ansprüche 1 bis 2, wobei die Rechenmittel (34) ein Gyrometer-Emulationsmodul (340) umfassen, das dazu ausgebildet ist, eine Größe, den sogenannten Winkelschritt, zu bestimmen, der repräsentativ für die Lageänderung des Satelliten (10) ist, die durch das wenigstens eine gyroskopische Stellglied (20) induziert wird, unter Verwendung der Messung der Winkelposition des Kardangelenks (22) durch den Positionssensor (32) und der Messung der Drehgeschwindigkeit des Schwungrads (21) durch den Geschwindigkeitssensor (33), wobei die Lage des Satelliten (10) unter Verwendung des Winkelschrittes und der Messung der Lage des Satelliten (10) durch den Lagesensor (31) bestimmt wird.

4. Vorrichtung (30) nach Anspruch 3, wobei die Rechenmittel (34) einen Schätzfilter umfassen, der als Eingabe den Winkelschritt und die Messung der Lage des Satelliten (10) empfängt und als Ausgabe eine Schätzung der Lage des Satelliten (10) liefert.

5. Vorrichtung (30) nach einem der Ansprüche 1 bis 4, wobei der Satellit (10) ein Beobachtungssatellit ist, der zwischen verschiedenen Lageregelungsphasen wechselt, die Manövrierphasen und Bildaufnahmephasen umfassen, wobei die Rechenmittel (34) dazu ausgebildet sind, Gewichtungskoeffizienten anzuwenden, um die jeweiligen Beiträge zu gewichten, wobei bei der Lagebestimmung die Gewichtungskoeffizienten von der Messung des Lagesensors (31) einerseits und den Messungen des Positionssensors (32) und des Geschwindigkeitssensors (33) andererseits abhängig sind, wobei die Gewichtungskoeffizienten von der aktuellen Lagekontrollphase abhängen, um:

   - während der Manövrierphasen: den Beitrag der Messung des Lagesensors (31) im Vergleich zum Beitrag der Messungen des Positionssensors (32) und des Geschwindigkeitssensors (33) zu erhöhen,
   - während der Bildaufnahmephasen: den Beitrag der Messungen des Positionssensors (32) und des Geschwindigkeitssensors (33) im Vergleich zum Beitrag der Messungen des Lagesensors (31) zu erhöhen.

6. Vorrichtung (30) nach einem der Ansprüche 1 bis 5, wobei das Kardangelenk (22) des wenigstens einen gyroskopischen Stellglieds um zwei unterschiedliche Achsen drehbar gelagert ist und der Positionssensor (32) die jeweiligen Winkelpositionen des Kardangelenks (22) um die beiden Drehachsen messen kann, wobei die Rechenmittel (34) dazu ausgebildet sind, die Lage des Satelliten (10) unter Verwendung der Messungen der jeweiligen Winkelpositionen des Kardangelenks (22) um die beiden Drehachsen zu bestimmen, die von dem Positionssensor (32) vorgenommen werden.

7. Vorrichtung (30) nach einem der Ansprüche 1 bis 6, wobei das Lageregelungssystem mehrere gyroskopische Stellglieder (20) umfasst, die jeweils ein Kardangelenk (22), ein Schwungrad (21), einen Positionssensor (32) und einen Geschwindigkeitssensor (33) aufweisen, wobei die Rechenmittel (34) dazu ausgebildet sind, die Lage des Satelliten (10) zu bestimmen, indem sie die von den Positionssensoren (32) durchgeführten Messungen der Winkelpositionen der Kardangelenke (22), die von den Geschwindigkeitssensoren (33) durchgeführten Messungen der Drehzahlen der Schwungräder (21) und die von dem Lagesensor (31) durchgeführte Messung der Lage des Satelliten (10) verwenden.

8. Satellit (10), umfassend ein Lageregelungssystem, das wenigstens ein gyroskopisches Stellglied (20) umfasst, wobei das wenigstens eine gyroskopische Stellglied ein um eine Drehachse drehbar gelagertes Schwungrad (21) umfasst, das von einem um eine Drehachse drehbar gelagerten Kardangelenk (22) getragen wird, **dadurch gekennzeichnet, dass** es eine Vorrichtung (30) zur Lagebestimmung nach einem der Ansprüche 1 bis 7 umfasst.

9. Satellit (10) nach Anspruch 8, **dadurch gekennzeichnet, dass** er kein Gyrometer umfasst.

10. Verfahren (50) zur Bestimmung der Lage eines Satelliten (10), wobei der Satellit mit einem Lageregelungssystem ausgestattet ist, das wenigstens ein gyroskopisches Stellglied (20) umfasst, wobei das wenigstens eine gyroskopische Stellglied ein Schwungrad (21) umfasst, das um eine Drehachse drehbar montiert ist, wobei das Schwungrad von einem Kardangelenk (22) getragen wird, das um eine Drehachse drehbar angelenkt ist, wobei der Satellit (10) ferner einen Lagesensor (31) umfasst, der die Lage des Satelliten messen kann, wobei das wenigstens eine gyroskopische Stellglied (20) zuvor mit einem Positionssensor (32), der die Winkelposition des Kardangelenks (22) um seine Drehachse messen kann, und einem Geschwindigkeitssensor (33), der die Drehgeschwindigkeit des Schwungrads (21) um seine Drehachse messen kann, versehen wurde, wobei das Verfahren die folgenden Schritte umfasst:

   - (51) Messen der Winkelposition des Kardangelenks (22) um seine Drehachse herum mittels des Positionssensors (32),
   - (52) Messen der Drehgeschwindigkeit des Schwungrads (21) um seine Drehachse herum mittels des Geschwindigkeitssensors (33),
   - (53) Messen der Lage des Satelliten (10) mittels des Lagesensors (31),
   - (54) Bestimmen der Lage des Satelliten unter Verwendung der Messung der Winkelposition des Kardangelenks (22) durch den Positionssensor (32), der Messung der Drehgeschwindigkeit des Schwungrads (21) durch den Geschwindigkeitssensor (33) und der Messung der Lage des Satelliten (10) durch den Lagesensor (31).

11. Verfahren (50) nach Anspruch 10, umfassend einen Schritt zur Bestimmung einer Größe, Winkelschritt genannt, die repräsentativ für die Lageänderung des Satelliten (10) ist, die durch das wenigstens eine gyroskopische Stellglied (20) induziert wird, wobei die Lage des Satelliten (10) unter Verwendung der Messung der Winkelposition des Kardangelenks (22) durch den Positionssensor (32) und der Messung der Drehgeschwindigkeit des Schwungrads (21) durch den Geschwindigkeitssensor (33) bestimmt wird, wobei die Lage des Satelliten (10) unter Verwendung des Winkelschrittes und der Messung der Lage des Satelliten (10) durch den Lagesensor (31) bestimmt wird.

12. Verfahren (50) nach einem der Ansprüche 10 bis 11, wobei, da der Satellit (10) ein Beobachtungssatellit ist, der zwischen verschiedenen Lageregelungsphasen wechselt, die Manövrierphasen und Bildaufnahmephasen umfassen, das Verfahren (50), bei der Bestimmung der Lage, der Messung des Lagesensors (31) einerseits und den Messungen des Positionssensors (32) und des Geschwindigkeitssensors (33) andererseits, eine Verwendung von Gewichtungskoeffizienten zur Gewichtung der jeweiligen Beiträge umfasst, wobei die Gewichtungskoeffizienten von der aktuellen Phase der Lageregelung abhängen und bestimmt werden, um:

   - während der Manövrierphasen: den Beitrag der Messung des Lagesensors (31) im Vergleich zum Beitrag der Messungen des Positionssensors (32) und des Geschwindigkeitssensors (33) zu erhöhen,
   - während der Bildaufnahmephasen: den Beitrag der Messungen des Positionssensors (32) und des Geschwindigkeitssensors (33) im Vergleich zum Beitrag der Messungen des Lagesensors (31) zu erhöhen.

13. Verfahren (50) nach einem der Ansprüche 10 bis 12, wobei das Kardangelenk (22) des wenigstens einen gyroskopischen Stellglieds um zwei unterschiedliche Achsen drehbar gelagert ist und der Lagesensor (32) die jeweiligen Winkelpositionen des Kardangelenks (22) um die beiden Drehachsen messen kann, wobei die Lage des Satelliten (10) bestimmt wird, indem die Messungen der jeweiligen Winkelpositionen des Kardangelenks (22) um die beiden Drehachsen, die von dem Positionssensor (32) vorgenommen werden, verwendet werden.

**14.** Verfahren (50) nach einem der Ansprüche 10 bis 13, wobei das Lageregelungssystem mehrere gyroskopisches Stellglieder (20) umfasst, die jeweils ein Kardangelenk (22), ein Schwungrad (21), einen Positionssensor (32) und einen Geschwindigkeitssensor (33) aufweisen, wobei die Lage des Satelliten (10) bestimmt wird, indem die von den Positionssensoren (32) durchgeführten Messungen der Winkelpositionen der Kardangelenke (22), die von den Geschwindigkeitssensoren (33) durchgeführten Messungen der Drehzahlen der Schwungräder (21) und die von dem Lagesensor (31) durchgeführte Messung der Lage des Satelliten (10) verwendet werden.

**15.** Computerprogrammprodukt, **dadurch gekennzeichnet, dass** es eine Reihe von Programmcodeanweisungen enthält, die, wenn sie von einem Prozessor ausgeführt werden, den Prozessor dazu konfigurieren, ein Verfahren nach einem der Ansprüche 10 bis 14 auszuführen.

**Claims**

**1.** - Device (30) for determining an attitude of a satellite (10), said satellite being provided with an attitude control system comprising at least one gyroscopic actuator (20), said at least one gyroscopic actuator comprising a flywheel (21) mounted so as to be rotatable around an axis of rotation, said flywheel being carried by a gimbal (22) articulated to rotate around an axis of rotation, said device (30) comprising an attitude sensor (31) capable of measuring the attitude of said satellite, said device (30) comprising:

- a position sensor (32) capable of measuring the angular position of the gimbal (22) around its axis of rotation,
- a speed sensor (33) capable of measuring the rotational speed of the flywheel (21),
- calculation means (34) configured to determine the attitude of the satellite (10) by using the measurement of the angular position of the gimbal (22) carried out by the position sensor (32), the measurement of the rotational speed of the flywheel (21) carried out by the speed sensor (33), and the measurement of the attitude of the satellite (10) carried out by the attitude sensor (31).

**2.** - Device (30) according to claim 1, wherein the attitude sensor (31) comprises one or more star trackers.

**3.** - Device (30) according to any one of claims 1 to 2, wherein the calculation means (34) comprise a rate gyro emulation module (340) configured to determine a quantity, called the angular increment, representative of the variation in attitude of the satellite (10) induced by the at least one gyroscopic actuator (20), by using the measurement of the angular position of the gimbal (22) carried out by the position sensor (32) and the measurement of the rotational speed of the flywheel (21) carried out by the speed sensor (33), the attitude of the satellite (10) being determined by using the angular increment and the measurement of the attitude of the satellite (10) carried out by the attitude sensor (31).

**4.** - Device (30) according to claim 3, wherein the calculation means (34) comprise an estimation filter which receives the angular increment and the measurement of the attitude of the satellite (10) as input, and which outputs an estimate of the attitude of the satellite (10).

**5.** - Device (30) according to any one of claims 1 to 4, wherein, the satellite (10) being an observation satellite alternating between different attitude control phases comprising maneuvering phases and image capture phases, the calculation means (34) are configured to apply weighting coefficients in order to weight the respective contributions, during the attitude determination, of the measurement from the attitude sensor (31) on the one hand and of the measurements from the position sensor (32) and speed sensor (33) on the other hand, the weighting coefficients being dependent on the attitude control phase in progress and being determined in order to:

- during maneuvering phases: increase the contribution of the measurement from the attitude sensor (31) relative to the contribution of the measurements from the position sensor (32) and speed sensor (33),
- during image capture phases: increase the contribution of the measurements from the position sensor (32) and speed sensor (33) relative to the contribution of the measurements from the attitude sensor (31).

**6.** - Device (30) according to any one of claims 1 to 5, wherein, the gimbal (22) of the at least one gyroscopic actuator being articulated to rotate around two different axes and the position sensor (32) being able to measure the respective angular positions of the gimbal (22) around said two axes of rotation, the calculation means (34) are configured to determine the attitude of the satellite (10) by using the measurements of the respective angular positions of said gimbal (22) around said two axes of rotation, carried out by the position sensor (32).

**7.** - Device (30) according to any one of claims 1 to 6, wherein, the attitude control system comprising several gyroscopic actuators (20) each comprising a gimbal (22), a flywheel (21), a position sensor (32), and a speed sensor (33), the calculation means (34) are configured to determine the attitude of the satellite (10) by using the measurements of the angular positions of the gimbals (22) carried out by the position sensors (32), the measurements of the rotational speeds of the flywheels (21) carried out by the speed sensors (33), and the measurement of the attitude of the satellite (10) carried out by the attitude sensor (31).

**8.** - Satellite (10) comprising an attitude control system comprising at least one gyroscopic actuator (20), said at least one gyroscopic actuator comprising a flywheel (21) mounted so as to be rotatable around an axis of rotation, said flywheel being carried by a gimbal (22) articulated to rotate around an axis of rotation, **characterized in that** it comprises a device (30) for determining attitude according to any one of claims 1 to 7.

**9.** - Satellite (10) according to claim 8, wherein it is without any rate gyros.

**10.** - Method (50) for determining an attitude of a satellite (10), said satellite being provided with an attitude control system comprising at least one gyroscopic actuator (20), said at least one gyroscopic actuator comprising a flywheel (21) mounted so as to be rotatable around an axis of rotation, said flywheel being carried by a gimbal (22) articulated to rotate around an axis of rotation, the satellite (10) further comprising an attitude sensor (31) capable of measuring the attitude of said satellite, the at least one gyroscopic actuator (20) being previously provided with a position sensor (32) capable of measuring the angular position of the gimbal (22) around its axis of rotation, and with a speed sensor (33) capable of measuring the rotational speed of the flywheel (21) around its axis of rotation, the method comprises steps of:

- (51) measuring the angular position of the gimbal (22) around its axis of rotation, by means of said position sensor (32),
- (52) measuring the rotational speed of the flywheel (21) around its axis of rotation, by means of said speed sensor (33),
- (53) measuring the attitude of the satellite (10), by means of said attitude sensor (31),
- (54) determining the attitude of the satellite by using the measurement of the angular position of the gimbal (22) carried out by the position sensor (32), the measurement of the rotational speed of the flywheel (21) carried out by the speed sensor (33), and the measurement of the attitude of the satellite (10) carried out by the attitude sensor (31).

**11.** - Method (50) according to claim 10, comprising a step of determining a quantity, called the angular increment, representative of the variation in attitude of the satellite (10) induced by the at least one gyroscopic actuator (20), by using the measurement of the angular position of the gimbal (22) carried out by the position sensor (32) and the measurement of the rotational speed of the flywheel (21) carried out by the speed sensor (33), the attitude of the satellite (10) being determined by using the angular increment and the measurement of the attitude of the satellite (10) carried out by the attitude sensor (31).

**12.** - Method (50) according to any one of claims 10 to 11, wherein, the satellite (10) being an observation satellite alternating between different attitude control phases comprising maneuvering phases and image capture phases, said method (50) comprises a use of weighting coefficients to weight the respective contributions, during the attitude determination, of the measurement from the attitude sensor (31) on the one hand and of the measurements from the position sensor (32) and speed sensor (33) on the other hand, the weighting coefficients being dependent on the attitude control phase in progress and being determined in order to:

- during maneuvering phases: increase the contribution of the measurement from the attitude sensor (31) relative to the contribution of the measurements from the position sensor (32) and speed sensor (33),
- during image capture phases: increase the contribution of the measurements from the position sensor (32) and speed sensor (33) relative to the contribution of the measurements from the attitude sensor (31).

**13.** - Method (50) according to any one of claims 10 to 12, wherein the gimbal (22) of the at least one gyroscopic actuator being articulated to rotate around two different axes and the position sensor (32) being able to measure the respective angular positions of the gimbal (22) around said two axes of rotation, the attitude of the satellite (10) is determined by using the measurements of the respective angular positions of said gimbal (22) around said two axes of rotation, carried out by the position sensor (32).

**14.** - Method (50) according to any one of claims 10 to 13, wherein, the attitude control system comprising several gyroscopic actuators (20) each comprising a gimbal (22), a flywheel (21), a position sensor (32), and a speed sensor (33), the attitude of the satellite (10) is determined by using the measurements of the angular positions of the gimbals (22) carried out by the position sensors (32), the measurements of the rotational speeds of the flywheels (21) carried out by the speed sensors (33), and the measurement of the attitude of the satellite (10) carried out by the attitude sensor (31).

**15.** - Computer program product, **characterized in that** it comprises a set of program code instructions which, when executed by a processor, configure said processor to implement a method according to any one of claims 10 to 14.

**Fig. 1**

**Fig. 2**

Mesures des positions
angulaires et des vitesses
de rotation des
actionneurs gyroscopiques

Mesure de l'attitude
du satellite

340

34

Module d'émulation de
gyromètre

Incrément angulaire

Filtre d'estimation

341

Attitude du satellite

**Fig. 3**

51  52  53

540

54

Détermination d'un
incrément angulaire

Estimation d'attitude

541

Attitude du satellite

**Fig. 4**

Fig. 5

## RÉFÉRENCES CITÉES DANS LA DESCRIPTION

**Documents brevets cités dans la description**

- FR 2957895 A1
- US 6263264 B
- WO 2012152669 A1

**Littérature non-brevet citée dans la description**

- **D. STEYN.** *Variable Speed Scissored Pair Dual Gimbal Control Moment Gyro for Nano-Satellites,* 2015